# EUROPÄISCHE PATENTANMELDUNG

(11) **EP 3 712 091 A1**
(43) Veröffentlichungstag der Anmeldung: **23.09.2020**
(21) Anmeldenummer: 20159188.0
(22) Anmeldetag: 25.02.2020
(51) Int. Cl.: B65G 17/48, B65G 47/38, B65G 47/61

(54) **VERFAHREN ZUM ENTLADEN VON TRANSPORTGUT AUS EINER TRANSPORTTASCHE**

(30) Priorität: 15.03.2019 CH 3282019
(71) Anmelder: FERAG AG, 8340 Hinwil (CH)
(72) Erfinder: RUGE, Martin, 4656 Starrkirch-Wil (CH)
(74) Vertreter: Rentsch Partner AG

(57) **Zusammenfassung**

Es wird ein Verfahren zum Entladen eines Transportguts (T) aus einer seitlich offenen Transporttasche (2), welche an einem Laufwagen (3) hängend das Transportgut (T) entlang einer Laufschiene (4) in einer Förderrichtung fördert, beschrieben, wobei das Transportgut (T) auf einer Auflagefläche (21) der Transporttasche (2) aufliegt und das Transportgut (T) durch Anheben eines Teils (211) der Auflagefläche (21) der Transporttasche (2) durch eine Anhebevorrichtung (11) in Richtung des Aufhängepunktes (P) der Transporttasche (2) am Laufwagen (3) seitlich entladen wird.

## Beschreibung

### PRIORITÄTSERKLÄRUNG

Die gegenwärtige Anmeldung beansprucht die Priorität der schweizerischen Patentanmeldung Nr. 00328/19, angemeldet am 15. März 2019.

### GEBIET DER ERFINDUNG

Die vorliegende Erfindung bezieht sich auf das Gebiet der Fördertechnik und betrifft ein Verfahren zum Entladen eines Transportguts aus einer seitlich offenen Transportasche und eine Taschenentladevorrichtung zur Durchführung eines solchen Verfahrens.

### HINTERGRUND DER ERFINDUNG

Beim Fördern von Transportgut mit geeigneten Transporttaschen ist das Entladen des Transportguts aus den Transporttaschen ein Aspekt, bei welchem ein einfaches und schnelles Verfahren mit einer möglichst hohen Automatisierung erwünscht wird.

Aus dem Stand der Technik sind mehrere Ansätze für das Entladen von Transportgut aus Transporttaschen bekannt. Die EP2686258 zum Beispiel beschreibt ein Hängefördersystem mit einer Transporttasche zur automatischen Entladung eines geladenen Stückguts und mit einer Entladestation, wobei die Transporttasche einen Grundkörper und eine daran schliessende, separate Aufnahme aufweist. Die Entladung der Transporttasche erfolgt durch eine der Stirnseiten des Grundkörpers hindurch, die offen ausgebildet ist, wobei eine gegenüberliegende Stirnseite ebenfalls offen ausgebildet ist. Die Unterseite des Grundkörpers koppelt an die Oberseite der Aufnahme, um einen Aufnahmeraum unterhalb des Grundkörpers zu definieren, wobei die seitlichen Seiten der Aufnahme derart ausgebildet sind, dass der Boden in eine Entladestellung der Transporttasche anhebbar ist, in welcher der Boden in die Unterseite des Grundkörpers gehoben ist. Die Transporttasche weist jeweils eine Rückhalteeinrichtung auf, die sich im Bereich der Stirnseiten zumindest entlang eines Übergangs zwischen dem Grundkörper und der Aufnahme erstreckt. Die Entladestation weist eine Hubeinrichtung und eine Schubeinrichtung auf, wobei die Hubeinrichtung eingerichtet ist, den Boden der Aufnahme der mit mindestens einem Stückgut beladenen Transporttasche, wenn sich die Transporttasche in einer Entladestellung befindet, in vertikaler Richtung derart anzuheben, dass das mindestens eine Stückgut mittels der Schubeinrichtung durch eine der Stirnseiten des Grundkörpers der Transporttasche horizontal ausschiebbar ist.

### DARSTELLUNG DER ERFINDUNG

Es ist eine Aufgabe der Erfindung, ein Verfahren zum Entladen eines Transportguts aus einer seitlich offenen Transporttasche und eine Taschenentladevorrichtung zur Durchführung eines solchen Verfahrens bereitzustellen, welche den Stand der Technik zum Entladen von Transportgütern aus seitlich offenen Transporttaschen mindestens teilweise verbessern.

Diese Aufgabe wird durch die Merkmale der unabhängigen Ansprüche gelöst. Vorteilhafte Ausgestaltungen der Erfindung sind in den abhängigen Ansprüchen und in der vorliegenden Beschreibung und den Figuren gegeben.

Die Erfindung betrifft ein Verfahren zum Entladen eines Transportguts aus einer seitlich offenen Transporttasche, welche an einem Laufwagen hängend das Transportgut entlang einer Laufschiene in einer Förderrichtung fördert, wobei das Transportgut auf einer Auflagefläche der Transporttasche aufliegt und das Transportgut durch Anheben eines Teils der Auflagefläche der Transporttasche in Richtung des Aufhängepunktes der Transporttasche am Laufwagen durch eine Anhebevorrichtung, seitlich entladen wird.

Insbesondere wird ein Teil der Auflagefläche der Transporttasche derart angehoben, dass ein restlicher Teil der Auflagefläche relativ zum angehobenen Teil abgesenkt wird. Durch das Anheben eines Teils der Auflagefläche der seitlich offenen Transporttasche kann das Transportgut automatisiert aus der Transporttasche entladen werden, ohne dass komplizierte Ausstossvorrichtungen wie z.B. Schieber benötigt werden. Vorteilhafterweise kann der Entladevorgang im Wesentlichen durch eine einzige lineare Bewegung des Anhebens durchgeführt werden, so dass ein steuerungstechnisch aufwändiges Abstimmen von verschiedenen Bewegungsabläufen, wie z.B. ein Anheben und ein Ausstossen, vermieden werden kann. Durch das lineare Anheben lediglich eines Teils der Auflagefläche der Transporttasche muss ferner beim Entladevorgang nicht die gesamte Transporttasche bewegt werden, sondern es reicht vorteilhafterweise aus, im Wesentlichen nur die Auflagefläche bzw. den angehobenen Teil der Auflagefläche zu bewegen. Die Effizienz und Präzision des Entladevorgangs kann somit erhöht werden.

Im Zusammenhang mit der vorliegenden Erfindung ist dem Fachmann klar, dass mit «seitlich offen» Transporttaschen gemeint sind, welche eine seitliche Öffnung derart aufweisen, dass eine seitliche Entnahme des Transportguts möglich ist, wobei auch Transporttaschen mit seitlichen Sicherungselementen bzw. Wandelementen unter diesen Begriff fallen können. Die «Höhe» von Teilen der Transporttasche wird in der Regel in Bezug auf den Aufhängepunkt der Transporttasche am Laufwagen verstanden.

Vorzugsweise werden die Transporttaschen in einer Hängefördervorrichtung durch an einer Laufschiene bewegbare Laufwagen gefördert.

In einer Ausgestaltung wird ein seitlicher Teil der Auflagefläche der Transporttasche derart angehoben, dass die Auflagefläche der Transporttasche quer zur Förderrichtung eine Schräge bildet.

Durch die Ausbildung einer Schräge kann das Transportgut gravitationsbedingt seitlich aus der Transporttasche herausrutschen, ohne zusätzliche Entnahmevorgänge wie z.B. Ausstossen oder Herausgreifen des Transportguts zu erfordern.

In einer Ausgestaltung verbleibt ein dem Laufwagen zugewandter oberer Randbereich der Transporttasche während dem Anheben des Teils der Auflagefläche der Transporttasche auf konstanter Höhe.

Insbesondere kann der Teil der Auflagefläche der Transporttasche derart angehoben werden, dass ein oberer Rand der Transporttasche nicht bewegt wird, d.h. die Position des Rands in Bezug auf den Aufhängepunkt der Transporttasche am Laufwagen unverändert bleibt. In bestimmten Ausgestaltungen umfasst die Transporttasche im oberen Randbereich einen beweglich gelagerten Rahmen. In diesen Ausgestaltungen kann der Teil der Auflagefläche der Transporttasche derart angehoben werden, dass die Position des Rahmens beim Anheben des Teils der Auflagefläche unverändert bleibt.

In einer Ausgestaltung wird eine an der Auflagefläche anschliessende Wandfläche der Transporttasche beim Anheben des Teils der Auflagefläche verformt.

Vorzugsweise umfasst die Transporttasche eine flexible Materialbahn, welche eine Transportschlaufe derart ausbildet, dass die an die Auflagefläche anschliessenden Wandflächen der Transporttaschen mindestens teilweise verformbar sind. Durch das Anheben eines Teils der Auflagefläche, insbesondere unter Beibehaltung der Höhe des oberen Randbereichs der Transporttasche, kann daher mindestens eine an der Auflagefläche anschliessende Wandfläche, in der Regel die in Bezug auf die Förderrichtung Vorder- und/oder Rückwand, verformt werden.

Insbesondere kann der Teil der Auflagefläche der Transporttasche derart angehoben werden, dass sich eine erste und eine gegenüberliegende, zweite seitliche Öffnung der Transporttasche relativ zueinander bewegen.

In einer Ausgestaltung wird die Auflagefläche der Transporttasche beim Anheben des Teils der Auflagefläche um eine durch die Auflagefläche der Transporttasche verlaufende, vorzugsweise horizontale, Achse verschwenkt.

Vorzugsweise verläuft die Achse senkrecht zu einer seitlichen Entladerichtung der Transporttasche. In einer Ausgestaltung verläuft die Achse im Wesentlichen parallel zur Förderrichtung der Transporttasche bzw. des Laufwagens.

Alternativ kann die Auflagefläche der Transporttasche beim Anheben des Teils der Auflagefläche um eine durch den Innenraum der Transporttasche verlaufende, vorzugsweise horizontale, Achse verschwenkt werden.

Insbesondere wird vorteilhafterweise beim Anheben nur die Auflagefläche verschwenkt und nicht die gesamte Transporttasche, was den Entladevorgang vereinfacht.

In einer Ausgestaltung wird die Auflagefläche der Transporttasche zur Schwenkbewegung überlagert linear verschoben.

Die lineare Verschiebung kann in senkrechter Richtung oder in einer anderen Richtung erfolgen. Dem Fachmann ist klar, dass überlagert zum Anheben des Teils der Auflagefläche bzw. zur Schwenkbewegung ein Versatz der Auflagefläche erfolgen kann. Auch bei einer überlagerten linearen Verschiebung der Auflagefläche als solche wird aber ein Teil der Auflagefläche relativ zu einem restlichen Teil der Auflagefläche angehoben, so dass die Auflagefläche eine Schräge bilden kann.

In einer Ausgestaltung wird der Abstand zwischen einer ersten und einer zweiten an der Auflagefläche anschliessenden Wandfläche der Transporttasche beim Anheben des Teils der Auflagefläche vergrössert.

In einer Ausgestaltung wird der Laufwagen zum Entladen des Transportguts aus der Transporttasche angehalten. Insbesondere kann der Laufwagen angehalten werden und danach der Teil der Auflagefläche der Transporttasche angehoben werden. Dies kann besonders vorteilhaft sein, wenn zum Anheben des Teils der Auflagefläche der Transporttasche eine aktive Anhebevorrichtung wie z.B. ein in der Höhe verstellbarer Stempel oder ein Eingriffmittel wie z.B. ein Haken, eine Schlaufe etc. verwendet wird.

In weiteren Ausgestaltungen wird das Transportgut während der Förderbewegung des Laufwagens aus der Transporttasche entladen. Insbesondere kann der Teil der Auflagefläche der Transporttasche während der Förderbewegung des Laufwagens angehoben werden. Dies kann besonders vorteilhaft sein, wenn zum Anheben des Teils der Auflagefläche der Transporttasche eine passive Anhebevorrichtung wie z.B. eine Kulisse und ein Eingriffmittel wie z.B. eine Rolle, ein Stift etc. verwendet wird.

Die Erfindung betrifft weiter eine Taschenentladevorrichtung zur Durchführung des Verfahrens gemäss der vorliegenden Erfindung, umfassend eine Anhebevorrichtung, welche ausgebildet ist, einen Teil einer Auflagefläche einer Transporttasche in Richtung des Aufhängepunktes der Transporttasche am Laufwagen derart anzuheben, dass die Auflagefläche quer zur Förderrichtung eine Schräge bildet.

Durch die Schräge kann eine Entladerichtung quer zur Förderrichtung definiert werden, so dass das Transportgut die Schräge hinabgleitend seitlich aus der Transporttaschen entladen werden kann. Vorzugsweise ist die Anhebevorrichtung eingerichtet, mit einem Teilbereich um den anzuhebenden Teil der Auflagefläche der Transporttasche zusammenzuwirken, wobei das Anheben durch eine Zugbewegung der Anhebevorrichtung von oberhalb der Auflagefläche und/oder durch eine Schubbewegung der Anhebevorrichtung von unterhalb der Auflagefläche erfolgen kann.

In einer Ausgestaltung ist die Anhebevorrichtung eingerichtet, den Teil der Auflagefläche mit einem Impuls anzuheben, welcher ausreicht, die Haftreibung des auf der Auflagefläche aufliegenden Transportguts zu überwinden.

Vorzugsweise ist die Anhebevorrichtung ausgebildet, nur mit dem Teilbereich um den anzuhebenden Teil der Auflagefläche der Transporttasche derart zusammenzuwirken, dass ein oberer, dem Laufwagen zugewandter Randbereich der Transporttasche während dem Anheben des Teils der Auflagefläche auf konstanter Höhe verbleibt.

Da es in der Regel ausreicht, dass die Anhebevorrichtung eingerichtet ist, eine lineare Anhebebewegung des Teils der Auflagefläche zu bewirken, kann die Taschenentladevorrichtung im Vergleich zu Lösungen aus dem Stand der Technik einfacher ausgebildet werden. Zum Beispiel können komplizierte Lagerungen am Aufhängepunkt der Transporttasche am Laufwagen vermieden werden, welche z.B. für eine Verschwenkung der gesamten Transporttasche erforderlich wären.

In einer Ausgestaltung umfasst die Taschenentladevorrichtung einen Sensor, welcher eingerichtet ist, die, insbesondere vertikale, Position der Auflagefläche zu ermitteln. Die Anhebevorrichtung kann den Hub bei der Anhebebewegung auf die ermittelte Position der Auflagefläche anpassen. Der Sensor kann alternativ oder in Ergänzung eingerichtet sein, die Dimensionen der Transporttasche und/oder des Transportguts zu ermitteln. Die Anhebevorrichtung kann den Hub bei der Anhebebewegung auf die ermittelten Dimensionen der Transporttasche und/oder des Transportguts anpassen. Der Sensor kann mit einer Steuerung verbunden sein, an welche die ermittelte Position und/oder Dimensionen übermittelt werden. Die Steuerung ist vorteilhafterweise ausgebildet, die Anhebevorrichtung anhand der durch den Sensor ermittelten Position und/oder Dimensionen zu steuern, insbesondere den Hub und/oder den Impuls der Anhebebewegung anzupassen.

In einer Ausgestaltung ist die Anhebevorrichtung ausgebildet, den Teil der Auflagefläche der Transporttasche derart anzuheben, dass eine an der Auflagefläche anschliessende Wandfläche der Transporttasche verformt wird.

In einer Ausgestaltung umfasst die Anhebevorrichtung einen in der Höhe verstellbaren Stempel, welcher eingerichtet ist, von unterhalb der Auflagefläche den Teil der Auflagefläche der Transporttasche in Richtung des Aufhängepunktes der Transporttasche am Laufwagen zu verschieben.

Vorzugsweise ist der Stempel von einer zentralen, vertikalen Achse der Transporttasche versetzt angeordnet, so dass der Stempel einen seitlichen Teilbereich der Tasche anheben kann.

In einer Ausgestaltung umfasst die Taschenentladevorrichtung zwei Stempel, welche einander gegenüberliegend von der zentralen, vertikalen Achse der Transporttasche versetzt angeordnet sind. Durch diese Anordnung kann die Auflagefläche der Transporttasche wahlweise in beiden seitlichen Richtungen der Transporttasche angehoben werden, so dass ein Entladen des Transportguts in beiden seitlichen Richtungen bzw. aus beiden seitlichen Öffnungen der Transporttasche heraus ermöglicht wird.

In einer Ausgestaltung weist der Stempel eine Schubfläche auf, welche eine Steigung quer zur Förderrichtung aufweist, wobei die Schubfläche in eine Entladerichtung abfallend ausgebildet ist.

Durch die Schubfläche kann der Stempel das Ausbilden einer Schräge unterstützen. Insbesondere bei einer flexiblen Auflagefläche der Transporttasche kann die Schubfläche des Stempels die Schräge stabilisieren.

In einer Ausgestaltung weist der Stempel eine um eine horizontale Achse verschwenkbare Schubfläche auf. Durch das Verschwenken der Schubfläche kann die Entladerichtung von einer Seite der Transporttasche zur gegenüberliegenden Seite der Transporttasche geändert werden.

In einer Ausgestaltung weist die Anhebevorrichtung eine ortsfest angeordnete Kulisse auf, welche ausgebildet ist, von unterhalb der Auflagefläche den Teil der Auflagefläche der Transporttasche anzuheben. Die Kulisse ist vorzugsweise von einer zentralen, vertikalen Achse der Transporttasche versetzt angeordnet, so dass ein seitlicher Teil der Auflagefläche der Transporttasche über die Kulisse fahren und durch die Kulisse angehoben werden kann.

Vorzugsweise weist die Transporttasche im Bereich der Auflagefläche eine Verstärkung auf, welche die Ausbildung einer Schräge beim Fahren der Auflagefläche über die Kulisse unterstützt. Die Verstärkung kann Streben, Leisten, Stäbe o.ä. umfassen.

In einer Ausgestaltung umfasst die Anhebevorrichtung ein erstes Eingriffmittel, welches ausgebildet ist, in ein zweites Eingriffmittel der Transporttasche einzugreifen und den Teil der Auflagefläche der Transporttasche in Richtung des Aufhängepunktes der Transporttasche am Laufwagen anzuheben.

Das erste und/oder das zweite Eingriffmittel kann u.a. mindestens eines aus Haken, Kamm, Schlaufe, Kante, Kulisse, Rolle, Stift, umfassen.

Zum Beispiel kann das erste Eingriffmittel einen Haken und das zweite Eingriffmittel eine seitlich an der Transporttasche angeordnete Schlaufe umfassen, so dass der Haken in die Schlaufe eingreifen und einen seitlichen Teil der Auflagefläche der Transporttasche mit einer Zugbewegung anheben kann, wobei die Anhebevorrichtung in diesem Fall oberhalb der Auflagefläche der Transporttasche angeordnet ist.

In einer Ausgestaltung umfasst das zweite Eingriffmittel mehrere seitlich an der Transporttasche angeordnete Schlaufen, in welche ein Haken oder ein Kamm des ersten Eingriffmittels eingreifen kann. Dies hat den Vorteil, dass die Zuverlässigkeit des Ineinandergreifens des ersten und des zweiten Eingriffmittels erhöht werden kann.

Alternativ und in entsprechender Weise kann das erste Eingriffmittel eine Schlaufe und das zweite Eingriffmittel einen Haken umfassen.

Ein Haken des ersten Eingriffmittels kann auch in eine Kante des zweiten Eingriffmittels der Transporttasche eingreifen. Alternativ und in entsprechender Weise kann eine Kante des ersten Eingriffmittels in einen Haken des zweiten Eingriffmittels der Transporttasche eingreifen. Es ist auch denkbar, dass das erste Eingriffmittel und das zweite Eingriffmittel jeweils ineinander greifbar ausgebildete Kanten umfassen.

In einem weiteren Beispiel kann das erste Eingriffmittel eine fest angeordnete Kulisse umfassen, über welche eine seitlich an der Transporttasche angeordnete Rolle oder ein seitlich an der Transporttasche angeordneter Stift der Transporttasche derart geführt werden kann, dass ein seitlicher Teil der Auflagefläche der Transporttasche angehoben wird. In diesem Fall kann das Transportgut vorteilhafterweise ohne Anhalten der Transporttasche entladen werden.

In einer weiteren Ausgestaltung umfasst die Anhebevorrichtung eine Rolle, welche ausgebildet ist, durch Rotation einen Teil der Auflagefläche derart anzuheben, dass die Auflagefläche quer zur Förderrichtung eine Schräge bildet.

Vorzugsweise weist die Rolle eine Rotationsachse auf, welche horizontal und senkrecht zu einer seitlichen Entladerichtung orientiert ist. Die Rolle ist vorzugsweise von einer zentralen, vertikalen Achse der Transporttasche versetzt angeordnet.

In einer Ausgestaltung ist die Rolle als Bürstenrolle ausgebildet, wobei die Bürstenrolle einen Bürstenbesatz aufweist, welcher eingerichtet ist, einen Teil der Auflagefläche der Transporttasche in Richtung des Aufhängepunktes der Transporttasche am Laufwagen anzuheben.

In einer Ausgestaltung ist die Rolle als Bürstenrolle ausgebildet, wobei die Bürstenrolle einen Bürstenbesatz aufweist, welcher in einer Ruhekonfiguration an der Bürstenrolle anliegt und sich bei Rotation radial aufrichtet und dadurch den effektiven Durchmesser der Bürstenrolle vergrössert. Aufgrund des radialen Aufrichtens des Bürstenbesatzes kann die Bürstenrolle durch Rotation ein lineares Anheben eines Teils der Auflagefläche der Transporttasche bewirken. Der Bürstenbesatz kann sich über den gesamten Umfang oder über einen Teilumfang der Bürstenrolle erstrecken.

In einer weiteren Ausgestaltung ist die Rolle als Bürstenrolle mit einem Bürstenbesatz ausgebildet, wobei sich der Bürstenbesatz über einen Teilumfang der Bürstenrolle erstreckt und eine über den Teilumfang variierende, vorzugsweise in entgegen einer Rotationsrichtung zunehmende, Besatzlänge aufweist.

In einer Ausgestaltung weist die Rolle einen Vorsprung auf, welcher eingerichtet ist, bei Rotation der Rolle einen Teil der Auflagefläche der Transporttasche anzuheben.

Der Vorsprung der Rolle kann als Nocken ausgebildet sein. Der Nocken kann Lagerungsrollen umfassen, welche ein Abrollen des Nockens an der anzustossenden Auflagefläche vereinfachen. Der Nocken kann als gebogener Schenkel ausgebildet sein.

Die Erfindung betrifft weiter eine Fördervorrichtung umfassend eine Taschenentladevorrichtung gemäss der vorliegenden Erfindung, eine Laufschiene und eine Vielzahl von seitlich offenen Transporttaschen, welche jeweils an einem entlang der Laufschiene bewegbaren Laufwagen hängend in einer Förderrichtung förderbar sind.

In einer Ausgestaltung umfasst die Fördervorrichtung eine Steuerung, welche eingerichtet ist, die Anhebevorrichtung der Taschenentladevorrichtung derart zu steuern, dass die Anhebevorrichtung einen Teil einer Auflagefläche einer Transporttasche zum Entladen eines Transportguts aus der Transporttasche anhebt. Die Steuerung kann, wie oben beschrieben, mit einem Sensor der Taschenentladevorrichtung verbunden sein, welche eingerichtet ist, die Position der Auflagefläche einer Transporttasche und/oder die Dimensionen einer Transporttasche und/oder eines Transportguts in der Transportasche zu ermitteln und der Steuerung zu übermitteln.

Vorzugsweise sind die Laufwagen mit veränderbarem Abstand zueinander an der Laufschiene förderbar. In bestimmten Ausgestaltungen sind die Laufwagen mittels einer Förderkette an der Laufschiene förderbar.

In einer Ausgestaltung ist die Auflagefläche der Transporttasche in Förderrichtung oder entgegen der Förderrichtung geneigt. Der Abstand der in Bezug auf die Förderrichtung Vorder- und Rückwand der Transporttasche kann vor dem Anheben des Teils der Auflagefläche voneinander vergrössert werden. Die Auflagefläche kann dabei um eine quer zur Förderrichtung orientierte Achse verschwenkt werden, so dass die Neigung der Auflagefläche verändert wird.

In einer Ausgestaltung weist die Transporttasche seitliche Wandelemente auf, welche beim Transport ein seitliches Herausrutschen des Transportguts verhindern.

Durch das Verschwenken der Auflagefläche um die quer zur Förderrichtung orientierte Achse kann das Transportgut relativ zu den seitlichen Wandelementen verschoben werden, so dass ein Entladen durch seitliches Herausrutschen ermöglicht wird.

Die Transporttaschen können im oberen Randbereich einen Schwenkrahmen aufweisen, welcher derart verschwenkbar ist, dass der Abstand zwischen Vorder- und Rückwand der Transporttasche veränderbar ist.

Der Schwenkrahmen kann z.B. durch geeignete Kulissen entgegen der Förderrichtung oder in Förderrichtung verschwenkt werden.

In einer Ausgestaltung umfassen die Transporttaschen jeweils eine flexible Materialbahn, welche jeweils eine Transportschlaufe ausbildend an einem Aufhängepunkt am Laufwagen hängt, wobei die Transporttasche im Bereich der Auflagefläche eine Verstärkung aufweist. Vorzugsweise ist die Verstärkung eingerichtet, zum Anheben eines Teils der Auflagefläche der Transporttasche mit der Anhebevorrichtung zusammenzuwirken.

Die flexible Materialbahn muss nicht direkt, sondern kann über eine geeignete Aufhängungsvorrichtung am Laufwagen hängen. Zum Beispiel kann die flexible Materialbahn über einen Schwenkrahmen und einer Aufhängung für den Schwenkrahmen am Laufwagen hängen.

Die Verstärkung ist vorteilhafterweise derart ausgebildet, dass beim Anheben des Teils der Auflagefläche die Ausbildung einer Schräge unterstützt bzw. ermöglicht wird. Vorzugsweise ist die Verstärkung quer zur Förderrichtung bzw. entlang einer Entladerichtung orientiert.

Die Verstärkung kann Streben, Leisten, Stäbe o.ä. umfassen. Vorzugsweise sind die Streben, Leisten, Stäbe o.ä. in die Transporttasche bzw. in die flexible Materialbahn eingearbeitet.

In bestimmten Ausgestaltungen umfasst die Transporttasche eine flexible Materialbahn ohne Verstärkung der Transporttasche im Bereich der Auflagefläche. Zum Beispiel kann dies bei einer Ausgestaltung der Anhebevorrichtung umfassend einen Stempel mit einer geneigten Schubfläche der Fall sein, da die Schubfläche des Stempels die Schräge bereitstellt.

In einer Ausgestaltung weisen die Transporttaschen im Bereich von mindestens einer an der Auflagefläche anschliessenden Wandfläche der Transporttasche eine Verstärkungsstruktur auf, welche eingerichtet ist, Sollfaltstellen bereitzustellen, an welchen die Transporttasche beim Anheben des Teils der Auflagefläche der Transporttasche verformbar ist.

Die Sollfaltstellen können vorteilhafterweise dazu dienen, die Verformbarkeit der Wandflächen der Transporttaschen derart zu auszubilden, dass der Abstand zwischen Vorder- und Rückwand der Transporttasche beim Anheben des Teils der Auflagefläche der Transporttasche vergrössert wird. Dadurch kann eine seitliche Öffnung der Transporttasche in Entladerichtung in geeigneter Weise derart vergrössert werden, dass das Entladen des Transportguts vereinfacht wird.

### LISTE DER FIGUREN

Anhand der in den nachfolgenden Figuren gezeigten Ausführungsbeispiele und der dazugehörigen Beschreibung werden Aspekte der Erfindung näher erläutert. Es zeigen:
- Fig.1: eine perspektivische Ansicht einer Ausführungsform einer Taschenentladevorrichtung in einer Konfiguration vor Anheben eines Teils einer Auflagefläche einer Transporttasche;
- Fig.2: die Taschenentladevorrichtung aus Fig.1 beim Anheben des Teils der Auflagefläche;
- Fig.3a: eine Ausführungsform einer Transporttasche mit einem Schwenkrahmen in einer Frontalansicht;
- Fig.3b: eine Seitenansicht von zwei Konfigurationen der Transporttasche aus Fig.3a;
- Fig.4a: eine Frontalansicht einer Ausführungsform einer Taschenentladevorrichtung mit einer Anhebevorrichtung umfassend eine Bürstenrolle, mit der Bürstenrolle in Ruhekonfiguration;
- Fig.4b: die Taschenentladevorrichtung aus Fig.4a mit der Bürstenrolle während einer Rotationsbewegung;
- Fig.5a: eine Frontalansicht einer Ausführungsform einer Taschenentladevorrichtung umfassend eine Kulisse in einer Konfiguration vor Anheben eines Teils der Auflagefläche;
- Fig.5b: die Taschenentladevorrichtung aus Fig.5a beim Anheben des Teils der Auflagefläche;
- Fig.5c: die Kulisse aus Fig.5a und Fig.5b in einer Seitenansicht;
- Fig.6a-c: Frontalansichten von Ausführungsformen von Transporttaschen mit Verstärkungsstrukturen der Wandflächen;
- Fig.7a-b: Frontalansichten einer Ausführungsform einer Taschenentladevorrichtung mit einer Anhebevorrichtung umfassend eine Rolle mit einem Nocken in zwei verschiedenen Konfigurationen;
- Fig.8a-b: Frontalansichten einer Ausführungsform einer Taschenentladevorrichtung mit einer Anhebevorrichtung umfassend eine Bürstenrolle in zwei verschiedenen Konfigurationen;
- Fig.9a-b: Frontalansichten einer Ausführungsform einer Taschenentladevorrichtung mit einer Anhebevorrichtung umfassend eine Rolle mit einem als gebogenen Schenkel ausgebildeten Nocken in zwei verschiedenen Konfigurationen;
- Fig.10a-c: Frontalansichten einer Ausführungsform einer Taschenentladevorrichtung mit einer Anhebevorrichtung umfassend zwei gegenüberliegend angeordnete Stempel;
- Fig.11a-b: Frontalansichten einer Ausführungsform einer Taschenentladevorrichtung mit einer Anhebevorrichtung umfassend einen Stempel mit einer Schubfläche.

### BESCHREIBUNG EXEMPLARISCHER AUSFÜHRUNGSFORMEN

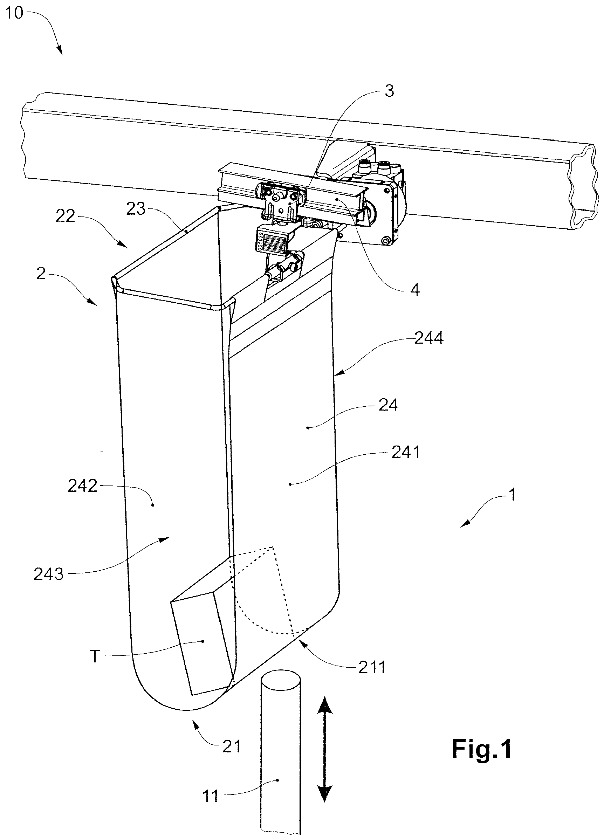

Figur 1 zeigt eine perspektivische Ansicht einer Ausführungsform einer Taschenentladevorrichtung 1 in einer Konfiguration vor Anheben eines Teils 211 einer Auflagefläche 21 einer seitlich offenen Transporttasche 2. Die Transporttasche 2 ist hängend an einem Laufwagen 3 angebracht, welcher an einer Laufschiene 4 einer Fördervorrichtung 10 förderbar angeordnet ist. Im oberen Randbereich 22 weist die Transporttasche 2 einen Schwenkrahmen 23 auf, welcher z.B. durch eine Kulisse verschwenkt werden kann.

Die Transporttasche 2 umfasst eine flexible Materialbahn 24, welche unter Ausbildung einer Transportschlaufe an ihren Enden am Schwenkrahmen 23 angebracht ist. In der Transporttasche 2 befindet sich ein Transportgut T, welches auf der gebogenen Auflagefläche 21 aufliegt. An der Auflagefläche 21 schliessen eine vordere Wandfläche 241 und eine hintere Wandfläche 242 an, welche eine Vorderwand und Hinterwand der Transporttasche 2 bilden. Durch die als Transportschlaufe ausgebildete Materialbahn 24 werden zwei seitliche Öffnungen 243 und 244 der Transporttasche 2 gebildet, aus welchen das Transportgut T entladen werden kann.

Durch das Verschwenken des Schwenkrahmens 23 kann der Abstand zwischen der vorderen Wandfläche 241 und der hinteren Wandfläche 242 verändert werden.

In Figur 1 ist der Schwenkrahmen 23 in einer horizontalen Konfiguration gezeigt, in welcher der Abstand zwischen der vorderen Wandfläche 241 und der hinteren Wandfläche 242 maximal ist und daher ein Entladen des Transportguts T aus den seitlichen Öffnungen 243 und 244 begünstigt ist.

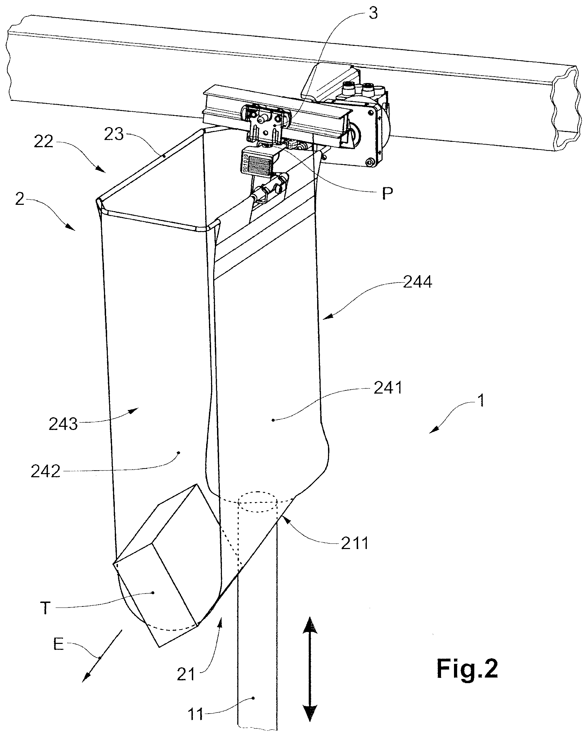

Unterhalb der Auflagefläche 21 ist ein in der Höhe verstellbarer Stempel 11 einer Anhebevorrichtung angeordnet. Die Höhenverstellbarkeit des Stempels 11 ist durch den Doppelpfeil angedeutet. Der Stempel 11 ist zu einer zentralen vertikalen Achse der Transporttasche 2 versetzt angeordnet, so dass beim Anstossen der Auflagefläche 21 ein seitlicher Teil 211 der Auflagefläche 21 angehoben wird, wie in Figur 2 ersichtlich ist.

Figur 2 zeigt die Taschenentladevorrichtung 1 aus Figur 1 beim Anheben des seitlichen Teils 211 der Auflagefläche 21 der Transporttasche 2. Der Laufwagen 3 ist zum Entladen des Transportguts T aus der Transporttasche 2 angehalten. Im Vergleich zur Konfiguration in Figur 1 ist der Stempel 11 nach oben ausgefahren, so dass der Stempel 11 den Teil 211 der Auflagefläche 21 anhebt. Durch das Anheben des Teils 211 bildet die Auflagefläche 21 eine Schräge in eine seitliche Entladerichtung E aus, so dass das Transportgut T aus der Öffnung 243 herausrutscht.

Weiter ist zu erkennen, dass das Anheben des Teils 211 durch den Stempel 11 sowohl die vordere Wandfläche 241 als auch die hintere Wandfläche 242 verformt wird und sich die Öffnung 244 relativ zur Öffnung 243 bewegt. Beim Anheben des Teils 211 der Auflagefläche 21 bleibt der obere Randbereich 22 und der Schwenkrahmen 23 auf konstanter Höhe. Insbesondere bleibt die Position des Randbereichs 22 in Bezug auf den Aufhängepunkt P der Transporttasche 2 am Laufwagen 3 unverändert.

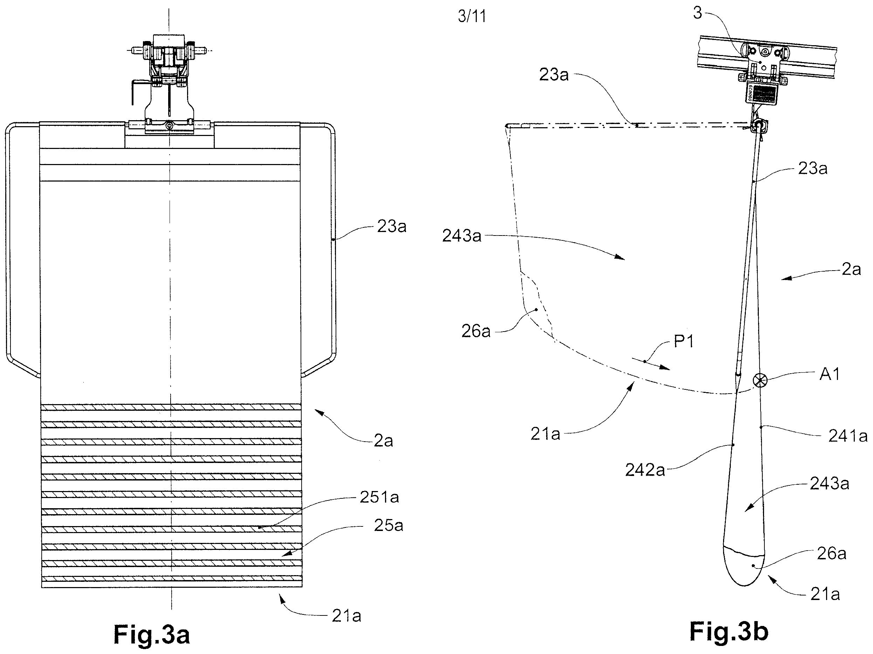

Figur 3a zeigt eine Ausführungsform einer seitlich offenen Transporttasche 2a mit einem Schwenkrahmen 23a in einer Frontalansicht. Die Transporttasche 2a weist im Bereich der Auflagefläche 21a eine Verstärkung 25a auf, welche quer zur Förderrichtung orientierte Verstrebungen 251a umfasst. Eine entsprechende Verstärkung der Transporttasche im Bereich der Auflagefläche ist auch für die in den anderen Figuren gezeigten Transporttaschen denkbar. Insbesondere für die Transporttaschen 2 und 2b-c, 2g-j der Figuren 1, 2, 4, 5 und 7-10 ist eine solche Verstärkung besonders vorteilhaft, um die Ausbildung einer Schräge der Auflagefläche zu unterstützen.

Figur 3b zeigt eine Seitenansicht von zwei Konfigurationen der seitlich offenen Transporttasche 2a aus Figur 3a. Die mit durchgezogenen Linien gezeigte Konfiguration der Transportasche 2a entspricht der in Figur 3a gezeigten Konfiguration, in welcher der Schwenkrahmen 23a vom Laufwagen 3 im Wesentlichen senkrecht herunterhängt und die vordere Wandfläche 241a und die hintere Wandfläche 242a einen kleinen Abstand zueinander aufweisen. Die Transporttasche 2a weist seitliche Wandelemente 26a auf, welche verhindern, dass ein in der Transporttasche 2a gefördertes Transportgut seitlich aus der Transporttasche 2a herausfallen kann. Die Auflagefläche 21a der Transporttasche 2a kann durch Verschwenken des Schwenkrahmens 23a um eine quer zur Förderrichtung orientierte, in die Zeichnungsebene hineinragende Achse A1 verschwenkt werden, wie mit der durch die strichpunktierten Linien dargestellten Konfiguration gezeigt wird.

Durch das Verschwenken der Auflagefläche 21a um die quer zur Förderrichtung orientierte Achse A1 wird das Transportgut relativ zu den seitlichen Wandelementen 26a in Richtung des Pfeils P1 verschoben, so dass ein Entladen aus einer seitlichen Öffnung 243a heraus ermöglicht wird. Weiter ist zu erkennen, dass die seitliche Öffnung 243a durch Verschwenken des Schwenkrahmens 23a vergrössert wird.

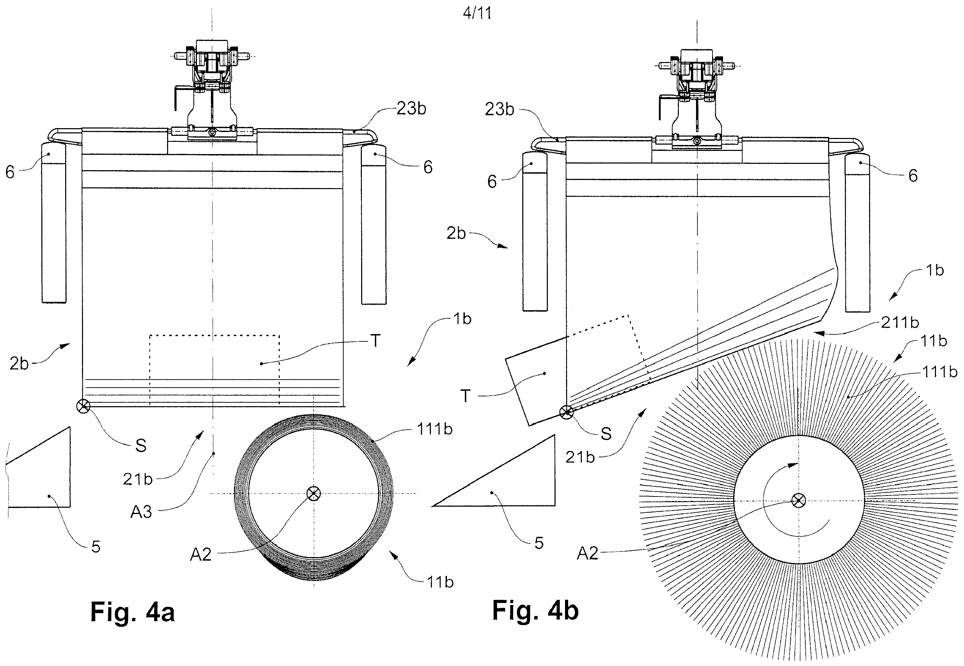

Figur 4a zeigt eine Frontalansicht einer Ausführungsform einer Taschenentladevorrichtung 1b mit einer Anhebevorrichtung umfassend eine Bürstenrolle 11b, mit der Bürstenrolle 11b in Ruhekonfiguration. Die Bürstenrolle 11b weist eine Rotationsachse A2 auf, welche horizontal und senkrecht zu einer seitlichen Entladerichtung orientiert ist, und von einer zentralen, vertikalen Achse A3 der Transporttasche 2b versetzt angeordnet ist. Die Bürstenrolle weist einen Bürstenbesatz 111b auf, welcher an der Bürstenrolle 11b anliegt.

Figur 4b zeigt die Taschenentladevorrichtung 1b aus Figur 4a mit der Bürstenrolle 11b während einer Rotationsbewegung um die Rotationsachse A2. Im Vergleich zur Ruhekonfiguration in Figur 4a ist der Bürstenbesatz 111b radial aufgerichtet, so dass dadurch der effektive Durchmesser der Bürstenrolle 11b quer zur Rotationsachse A2 vergrössert ist. Aufgrund des radialen Aufrichtens des Bürstenbesatzes 111b wird ein seitlicher Teil 211b der Auflagefläche 21b der Transporttasche 2b linear angehoben. Der Bürstenbesatz 111b erstreckt sich über den gesamten Umfang der Bürstenrolle 11b.

Durch das lineare Anheben des seitlichen Teils 211b bildet die Auflagefläche 21b eine Schräge in Entladerichtung aus, so dass das Transportgut T seitlich aus der Transporttasche 2b entladen werden kann. In Figur 4b ist erkennbar, dass das Transportgut T aus der Transporttasche 2b auf eine bei der Taschenentladevorrichtung 1b angeordnete Rampe 5 rutscht.

Sowohl in Figur 4a als auch in Figur 4b befindet sich der Schwenkrahmen 23b auf einer Kulisse 6, mittels welcher der Schwenkrahmen 23b in eine horizontale Lage verschwenkt und in dieser Lage gehalten wird, so dass der Abstand zwischen vorderer und hinterer Wandfläche der Transporttasche 2b vergrössert ist und das Transportgut T einfach aus einer seitlichen Öffnung der Transporttasche 2b entladen werden kann.

Durch Anhalten der Rotation der Bürstenrolle 11b legt sich der Bürstenbesatz 111b wieder an die Bürstenrolle 11b an, so dass der Teil 211b der Auflagefläche 21b bei Bedarf, z.B. nach dem Entladen des Transportguts T, wieder abgesenkt werden kann (entsprechend Figur 4a).

In den Figuren 4a und 4b ist zu erkennen, dass die Auflagefläche 21b beim Anheben des Teils 211b um eine durch die Auflagefläche 21b verlaufende Achse S verschwenkt wird.

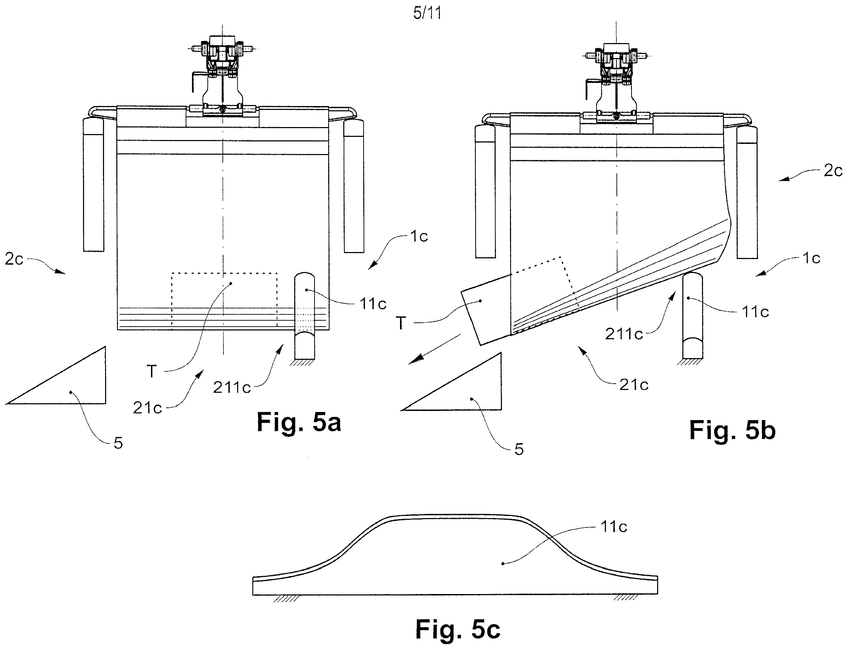

Die Krümmung der Transporttasche 2b im unteren Bereich der Transporttasche 2b, entsprechend der in Figur 1 ersichtlichen Krümmung der Transporttasche 1, ist mit horizontalen Linien im unteren Bereich der Transporttasche 2b angedeutet. Entsprechende Linien sind für die Transporttaschen in den Figuren 5a-b, 6a-c, 7a-b, 8a-b, 9a-b, 10a-c und 11a-b gezeigt.

Figur 5a zeigt eine Frontalansicht einer Ausführungsform einer Taschenentladevorrichtung 1c umfassend eine als Kulisse 11c ausgebildete Anhebevorrichtung in einer Konfiguration vor Anheben eines Teils 211c der Auflagefläche 21c der Transporttasche 2c. Die Förderrichtung der Transporttasche 2c zeigt aus der Zeichnungsebene heraus. Die Kulisse 11c ist von der zentralen, vertikalen Achse der Transporttasche 2c versetzt angeordnet.

Figur 5b zeigt die Taschenentladevorrichtung 1c aus Figur 5a beim Anheben des Teils 211c der Auflagefläche 21c durch die Kulisse 11c. Im Vergleich zur Figur 5a hat sich die Transporttasche 2c ein Stück weiter in Förderrichtung bewegt und ist dadurch auf einen erhöhten Bereich der Kulisse 11c aufgefahren, so dass die Kulisse 11c von unterhalb der Auflagefläche 21c den seitlichen Teil 211c der Auflagefläche 21c in Richtung des Aufhängepunktes der Transporttasche 2c am Laufwagen anhebt. Durch das Anheben des Teils 211c der Auflagefläche 21c wird quer zur Förderrichtung eine Schräge gebildet, so dass das Transportgut T seitlich aus der Transporttasche 2c auf eine Rampe 5 rutscht.

Figur 5c zeigt die Kulisse 11c aus Figur 5a und Figur 5b in einer Seitenansicht.

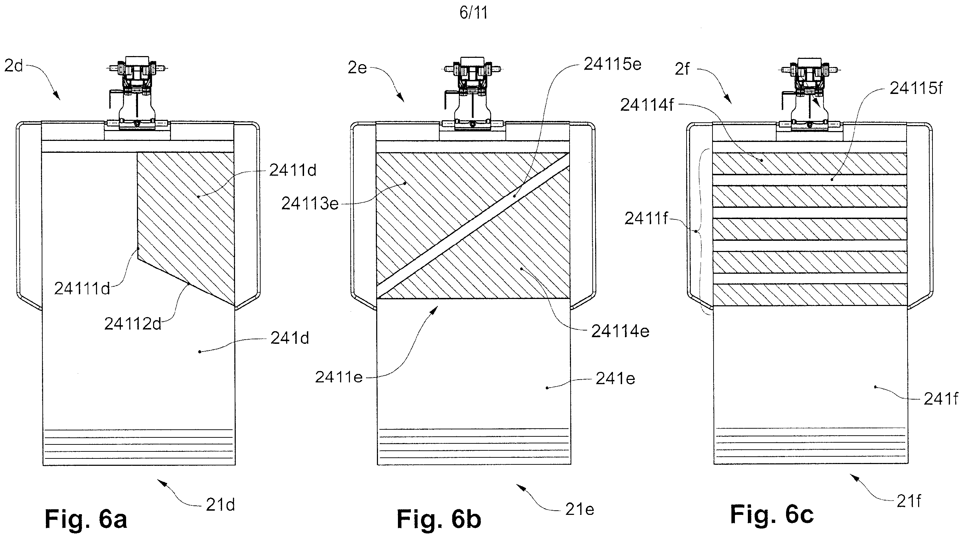

Figur 6a zeigt eine Frontalansicht einer Ausführungsform einer Transporttasche 2d mit einer Verstärkungsstruktur 2411d der vorderen Wandfläche 241d. Die hintere Wandfläche, welche in Figur 6a nicht sichtbar ist, kann ebenfalls eine entsprechende Verstärkungsstruktur aufweisen. Die Verstärkungsstruktur 2411d umfasst z.B. eine Hohlkammerplatte aus Kunststoff. Durch die Verstärkungsstruktur 2411d werden entlang der Kanten 24111d und 24112d Sollfaltstellen bereitgestellt, an welchen die Transporttasche 2d beim Anheben eines Teils der Auflagefläche 21d bevorzugt verformt wird. Durch die Verformung der Transporttasche 2d entlang den Sollfaltstellen 2411d und 24112d wird eine seitliche Öffnung der Transporttasche 2d in einer für das seitliche Entladen eines Transportguts günstigen Weise vergrössert.

Figur 6b zeigt eine Frontalansicht einer weiteren Ausführungsform einer Transporttasche 2e mit einer Verstärkungsstruktur 2411e der vorderen Wandfläche 241e umfassend zwei Teilplatten 24113e und 24114e, welche eine diagonal orientierte Sollfaltstelle 24115e der Transporttasche 2e bereitstellen. Die hintere Wandfläche der Transporttasche 2e kann ebenfalls eine entsprechende Verstärkungsstruktur aufweisen.

Figur 6c zeigt eine Frontalansicht einer weiteren Ausführungsform einer Transporttasche 2f mit einer Verstärkungsstruktur 2411f der vorderen Wandfläche 241f, welche mehrere gleichartige Teilplatten 24114f umfasst. Durch die Teilplatten 24114f werden mehrere horizontale Sollfaltstellen 24115f der Transporttasche 2f bereitgestellt. Die Teilplatten 24114f können in bestimmten Ausführungsformen als Leisten, Streben, Stäbe o.ä. ausgebildet sein.

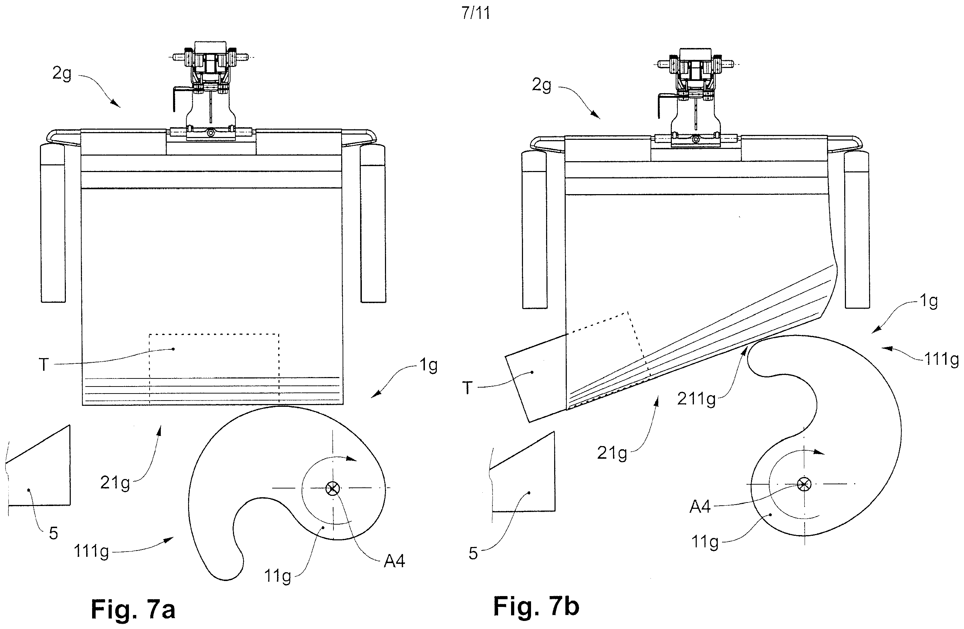

Figuren 7a-b zeigen Frontalansichten einer Ausführungsform einer Taschenentladevorrichtung 1g mit einer Anhebevorrichtung umfassend eine Rolle 11g mit einem Nocken 111g in zwei verschiedenen Rotationskonfigurationen. Die Rolle 11g ist um eine horizontale Achse A4 rotierbar. Der Nocken 111g ist als gebogener Schenkel ausgebildet. Durch Rotation der Rolle 11g und entsprechendem Anstossen der Auflagefläche 21g durch den Nocken 111g wird der Teil 211g in Richtung des Aufhängepunktes der Transporttasche 2g am Laufwagen angehoben, so dass die Auflagefläche 21g eine Schräge in Entladerichtung ausbildet. Das Transportgut T rutscht entlang der Schräge aus der Transporttasche 2g auf eine Rampe 5.

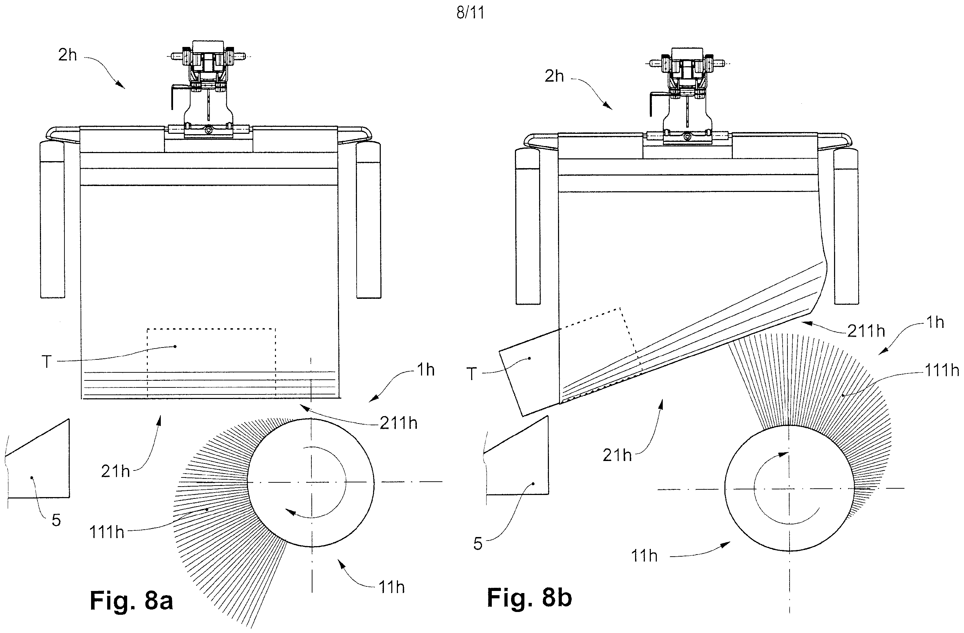

Figuren 8a-b zeigen Frontalansichten einer Ausführungsform einer Taschenentladevorrichtung 1h mit einer Anhebevorrichtung umfassend eine Bürstenrolle 11h in zwei verschiedenen Rotationskonfigurationen. Die Bürstenrolle 11h weist einen Bürstenbesatz 111h auf, welcher sich über einen Teilumfang der Bürstenrolle 11h erstreckt.

Der Bürstenbesatz 111h weist eine über den Teilumfang der Bürstenrolle 11h variierende, entgegen der Rotationsrichtung zunehmende radiale Besatzlänge auf. Die Bürstenrolle 11h ist seitlich zu einer zentralen, vertikalen Achse der Transporttasche 2h versetzt angeordnet. Durch die variierende Besatzlänge und die Anordnung der Bürstenrolle 11h kann ein seitlicher Teil 211h der Auflagefläche 21h bei Rotation der Bürstenrolle 11h angehoben werden, wie in Figur 8b ersichtlich ist.

Die Auflagefläche 21h der Transporttasche 2h bildet durch das Anheben des Teils 211h eine Schräge aus, so dass das Transportgut T seitlich aus der Transporttasche 2h herausrutschen kann. Wird die Bürstenrolle 11h von der Konfiguration in Figur 8b weiter rotiert, wird der Teil 211h der Auflagefläche 21h wieder abgesenkt, da ein Teilumfang der Bürstenrolle 11h ohne Bürstenbesatz 111h unter die Auflagefläche 21h in Position kommt.

Es ist auch denkbar, dass die radiale Besatzlänge des Bürstenbesatzes an einem bestimmten Punkt entgegen der Rotationsrichtung wieder abnimmt, so dass der Teil 211h der Auflagefläche 21h nach einem Anheben wieder entsprechend abgesenkt werden kann. In einem solchen Fall könnte sich der Bürstenbesatz auch über den gesamten Umfang der Rolle erstrecken.

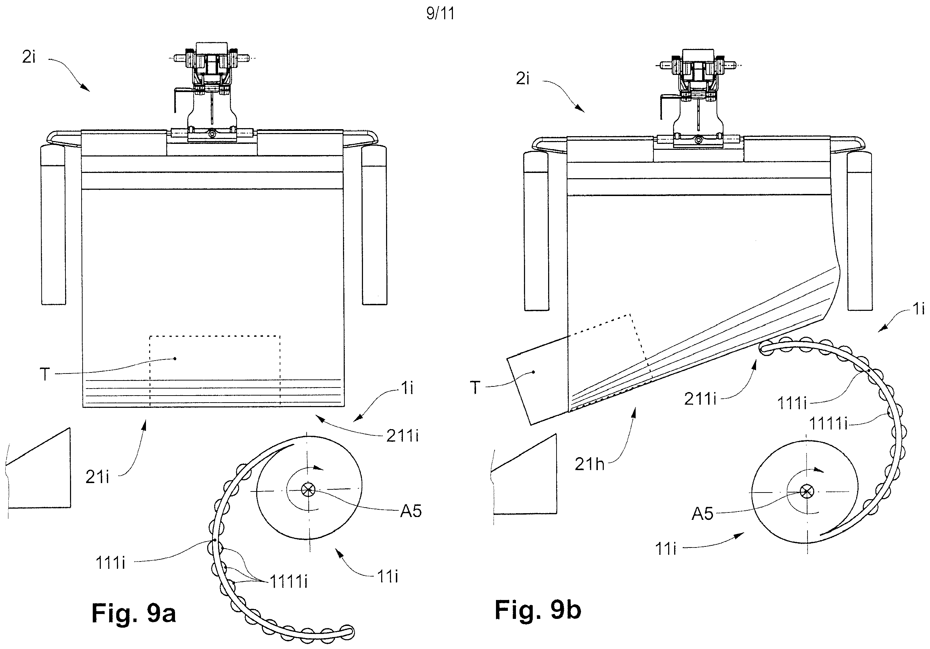

Figur 9a-b zeigen Frontalansichten einer Ausführungsform einer Taschenentladevorrichtung 1i mit einer Anhebevorrichtung umfassend eine Rolle 11i mit einem als gebogenen Schenkel 111i ausgebildeten Nocken in zwei verschiedenen Rotationskonfigurationen. Ähnlich wie in der in Figur 7 gezeigten Ausführungsform variiert der radiale Abstand des gebogenen Schenkels 111i von der Rotationsachse A5 der Rolle 11i entlang der Rotationsrichtung. In Figur 9a ist z.B. zu erkennen, dass der radiale Abstand des gebogenen Schenkels 111i von der Rotationsachse A5 entgegen der Rotationsrichtung zunimmt. Durch Rotation der Rolle 11i hebt die Rolle 11i einen Teil 211i der Auflagefläche 21i der Transporttasche 2i linear an, so dass ein Transportgut T seitlich aus der Transporttasche 2i entnommen werden kann. Der gebogene Schenkel 111i weist Lagerungsrollen 1111i auf, welche ein Abrollen des Schenkel 111i an der Auflagefläche 21i vereinfachen.

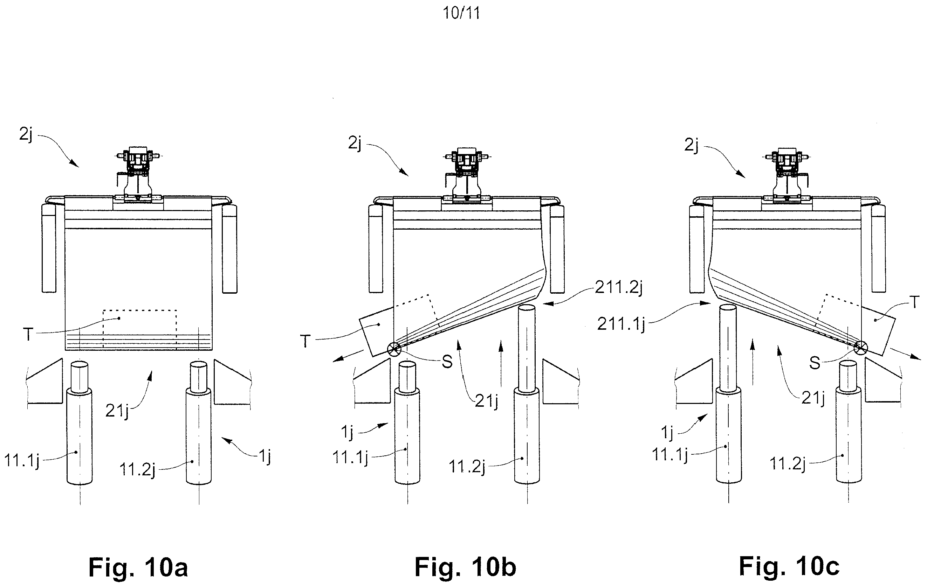

Figuren 10a-c zeigen Frontalansichten einer Ausführungsform einer Taschenentladevorrichtung 1j mit einer Anhebevorrichtung umfassend zwei gegenüberliegend angeordnete Stempel 11.1j und 11.2j. In Figur 10a sind beide Stempel 11.1j und 11.2j nicht ausgefahren, so dass die Auflagefläche 21j der Transporttasche 2j mit dem Transportgut T horizontal liegt. In Figur 10b ist der rechte Stempel 11.2j ausgefahren, so dass der rechte seitliche Teil 211.2j der Auflagefläche 21j angehoben wird und das Transportgut T in eine linke Entladerichtung aus der Transporttasche 2j herausrutscht. In Figur 10c hingegen ist nur der linke Stempel 11.1j ausgefahren, so dass der linke seitliche Teil 211.1j der Auflagefläche 21j angehoben wird und das Transportgut T in eine rechte Entladerichtung aus der Transporttasche 2j herausrutscht. Das Transportgut T kann daher wahlweise in beiden seitlichen Richtungen bzw. aus beiden seitlichen Öffnungen der Transporttasche 2j heraus entladen werden. Die durch die Auflagefläche 21j verlaufenden Achsen S, um welche die Auflagefläche 21j verschwenkt wird, sind in den Figuren 10b und 10c eingezeichnet.

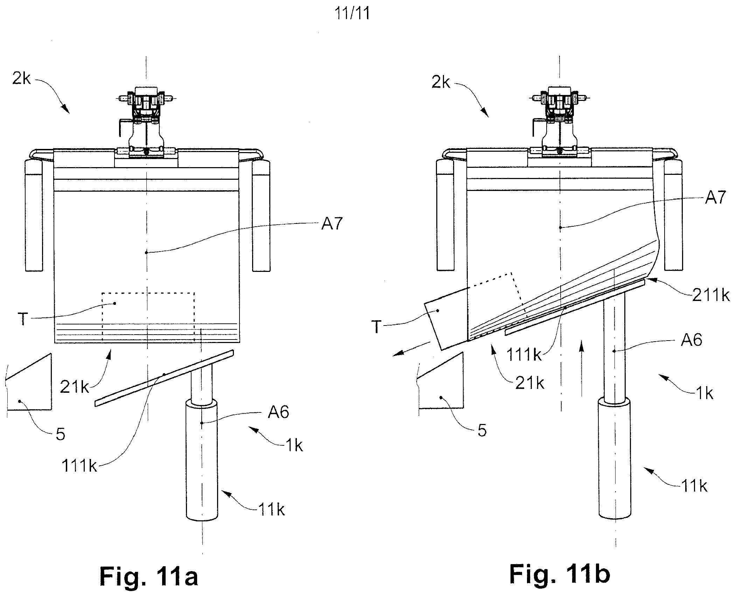

Figuren 11a-b zeigen Frontalansichten einer Ausführungsform einer Taschenentladevorrichtung 1k mit einer Anhebevorrichtung umfassend einen Stempel 11k mit einer Schubfläche 111k. Die Schubfläche 111k weist eine Steigung quer zur Förderrichtung auf, wobei die Schubfläche 111k in Entladerichtung abfallend ausgebildet ist. Die Förderrichtung zeigt aus der Zeichnungsebene heraus.

In Fig. 11a ist der Stempel 11k nicht ausgefahren, so dass die Auflagefläche 21k der Transporttasche 2k mit dem Transportgut T horizontal liegt. Der Stempel 11k weist eine Längsachse A6 auf, welche zu einer vertikalen, zentralen Achse A7 der Transporttasche 2k quer zur Förderrichtung versetzt angeordnet ist.

In Figur 11b ist der Stempel 11k ausgefahren, wie mit dem vertikalen Pfeil angedeutet ist. Durch das Ausfahren stösst die Schubfläche 111k des Stempels 11k die Auflagefläche 21k von unterhalb an, so dass ein Teil 211k der Auflagefläche 21k derart angehoben wird, dass die Auflagefläche 21k in Entladerichtung eine Schräge ausbildet. Auf der Schräge der Auflagefläche 21k kann das Transportgut T seitlich aus der Transporttasche 2k herausrutschen.

Da die Schräge der Auflagefläche 21k durch die Schubfläche 111k stabilisiert wird, ist in dieser Ausführungsform keine Verstärkung der Transporttasche 2k im Bereich der Auflagefläche 21k erforderlich. Die Steigung der Schräge der Auflagefläche 21k stimmt mit der Steigung der Schubfläche 111k überein. In bestimmten Ausführungsformen kann die Transporttasche 2k dennoch eine Verstärkung im Bereich der Auflagefläche 21k aufweisen.

In den Figuren 11a-b ist die Schubfläche 111k nach links abfallend ausgebildet, damit das Transportgut T nach links entladen werden kann. Es ist klar, dass die Schubfläche in entsprechender Weise auch nach rechts abfallend ausgebildet sein kann. In bestimmten Ausführungsformen kann die Schubfläche verschwenkbar ausgebildet sein, so dass die Entladerichtung wahlweise geändert werden kann.

Mit der Schubfläche 111k des Stempels 11k kann ausserdem bei Bedarf die Auflagefläche 21k der Transporttasche 2k zur Schwenkbewegung überlagert linear verschoben werden. Dies kann z.B. dann vorteilhaft sein, wenn die Rampe 5 auf einer Höhe liegt, für welche die durch das Anheben des Teils 211k der Auflagefläche 21k gebildete Schräge der Auflagefläche 21k unterhalb der Rampe 5 enden würde.

## Patentansprüche

1. Verfahren zum Entladen eines Transportguts (T) aus einer seitlich offenen Transporttasche (2, 2a-k), welche an einem Laufwagen (3) hängend das Transportgut (T) entlang einer Laufschiene (4) in einer Förderrichtung fördert, wobei das Transportgut (T) auf einer Auflagefläche (21, 21a-k) der Transporttasche (2, 2a-k) aufliegt und das Transportgut (T) durch Anheben eines Teils (211,211b-i, 21 1.1j, 211.2j, 211k) der Auflagefläche (21, 21a-k) der Transporttasche (2, 2a-k) in Richtung des Aufhängepunktes (P) der Transporttasche (2, 2a-k) am Laufwagen (3) durch eine Anhebevorrichtung (11, 11b-11i, 11.1j, 11.2j, 11k), seitlich entladen wird.

2. Verfahren nach Anspruch 1, **dadurch gekennzeichnet, dass** ein seitlicher Teil (211, 211b-i, 211.1j, 211.2j, 211k) der Auflagefläche (21, 21a-k) der Transporttasche (2, 2a-k) derart angehoben wird, dass die Auflagefläche (21, 21a-k) der Transporttasche (2, 2a-k) quer zur Förderrichtung eine Schräge bildet.

3. Verfahren nach Anspruch 1 oder 2, **dadurch gekennzeichnet, dass** ein dem Laufwagen (3) zugewandter oberer Randbereich (22) der Transporttasche (2, 2a-k) während dem Anheben des Teils (211, 211b-i, 211.1j, 211.2J, 211k) der Auflagefläche (21, 21a-k) der Transporttasche (2, 2a-k) auf konstanter Höhe verbleibt.

4. Verfahren nach einem der vorangehenden Ansprüche, **dadurch gekennzeichnet, dass** eine an der Auflagefläche (21, 21a-k) anschliessende Wandfläche (241, 242, 241a, 242a, 241d-f) der Transporttasche (2, 2a-k) beim Anheben des Teils (211, 211b-i, 211.1j, 211.2j, 211k) der Auflagefläche (21, 21a-k) verformt wird.

5. Verfahren nach einem der vorangehenden Ansprüche, **dadurch gekennzeichnet, dass** die Auflagefläche (21, 21a-k) der Transporttasche (2, 2a-k) beim Anheben des Teils (211, 211b-i, 211.1j, 211.2j, 211k) der Auflagefläche (21, 21a-k) um eine durch die Auflagefläche (21, 21a-k) der Transporttasche (2, 2a-k) verlaufende Achse (S) verschwenkt wird.

6. Verfahren nach einem der Ansprüche 1 bis 4, **dadurch gekennzeichnet, dass** die Auflagefläche der Transporttasche beim Anheben des Teils der Auflagefläche um eine durch den Innenraum der Transporttasche verlaufende Achse verschwenkt wird.

7. Verfahren nach Anspruch 5 oder 6, **dadurch gekennzeichnet, dass** die Auflagefläche der Transporttasche zur Schwenkbewegung überlagert linear verschoben wird.

8. Verfahren nach einem der vorangehenden Ansprüche, **dadurch gekennzeichnet, dass** der Laufwagen (3) zum Entladen des Transportguts (T) aus der Transporttasche (2, 2b, 2g-k) angehalten wird.

9. Taschenentladevorrichtung (1, 1b-1k) zur Durchführung des Verfahrens nach einem der vorangehenden Ansprüche, umfassend eine Anhebevorrichtung (11, 11b-11i, 11.1j, 11.2j, 11k), welche ausgebildet ist, einen Teil (211, 211b-i, 211.1j, 211.2j, 211k) einer Auflagefläche (21, 21a-k) einer Transporttasche (2, 2a-k) in Richtung des Aufhängepunktes (P) der Transporttasche (2, 2a-k) am Laufwagen (3) derart anzuheben, dass die Auflagefläche (21, 21a-k) quer zur Förderrichtung eine Schräge bildet.

10. Taschenentladevorrichtung (1, 1b-1k) nach Anspruch 9, **dadurch gekennzeichnet, dass** die Anhebevorrichtung (11, 1 1b-1 1i, 11.1j, 11.2j, 11k) ausgebildet ist, den Teil (211, 211b-i, 21 1.1j, 21 1.2j, 211k) der Auflagefläche (21, 21a-k) der Transporttasche (2, 2a-k) derart anzuheben, dass eine an der Auflagefläche (21, 21a-k) anschliessende Wandfläche (241, 242, 241a, 242a, 241d-f) der Transporttasche (2, 2a-k) verformt wird.

11. Taschenentladevorrichtung (1, 1j-k) nach Anspruch 9 oder 10, **dadurch gekennzeichnet, dass** die Anhebevorrichtung (11, 11.1j, 11.2j, 11k) einen in der Höhe verstellbaren Stempel (11, 11.1j, 11.2j, 11k) umfasst, welcher eingerichtet ist, von unterhalb der Auflagefläche (21, 21j, 21k) den Teil (211, 211.1J, 211.2j, 211k) der Auflagefläche (21, 21j, 21k) der Transporttasche (2, 2j, 2k) in Richtung des Aufhängepunktes (P) der Transporttasche (2, 2j, 2k) am Laufwagen (3) zu verschieben.

12. Taschenentladevorrichtung (1k) nach Anspruch 11, **dadurch gekennzeichnet, dass** der Stempel (11k) eine Schubfläche (111k) aufweist, welche eine Steigung quer zur Förderrichtung aufweist, wobei die Schubfläche (111k) in eine Entladerichtung abfallend ausgebildet ist.

13. Taschenentladevorrichtung (1c) nach Anspruch 9 oder 10, **dadurch gekennzeichnet, dass** die Anhebevorrichtung eine ortsfest angeordnete Kulisse (11c) aufweist, welche ausgebildet ist, von unterhalb der Auflagefläche (21c) den Teil (211c) der Auflagefläche (21c) der Transporttasche (2c) anzuheben.

14. Taschenentladevorrichtung (1b, 1g-i) nach Anspruch 9 oder 10, **dadurch gekennzeichnet, dass** die Anhebevorrichtung eine Rolle (11b, 11g-i) umfasst, welche ausgebildet ist, durch Rotation einen Teil (211b, 211g-i) der Auflagefläche (21b, 21g-i) derart anzuheben, dass die Auflagefläche (21b, 21g-i) quer zur Förderrichtung eine Schräge bildet.

15. Taschenentladevorrichtung (1b, 1h) nach Anspruch 14, **dadurch gekennzeichnet, dass** die Rolle als Bürstenrolle (11b, 11h) ausgebildet ist, wobei die Bürstenrolle (11b, 11h) einen Bürstenbesatz (111b, 111h) aufweist, welcher eingerichtet ist, einen Teil der Auflagefläche (21b, 21h) der Transporttasche (2b, 2h) in Richtung des Aufhängepunktes (P) der Transporttasche (2b, 2h) am Laufwagen (3) anzuheben.

16. Taschenentladevorrichtung (1g, 1i) nach Anspruch 14, **dadurch gekennzeichnet, dass** die Rolle (11g, 11i) einen Vorsprung (111g, 111i) aufweist, welcher eingerichtet ist, bei Rotation der Rolle (11g, 11i) einen Teil der Auflagefläche (21g, 21i) der Transporttasche (2g, 2i) anzuheben.

17. Taschenentladevorrichtung nach einem der Ansprüche 9 bis 16, **dadurch gekennzeichnet, dass** die Anhebevorrichtung ein erstes Eingriffmittel umfasst, welches ausgebildet ist, in ein zweites Eingriffmittel der Transporttasche einzugreifen und den Teil der Auflagefläche der Transporttasche in Richtung des Aufhängepunktes der Transporttasche am Laufwagen anzuheben.

18. Taschenentladevorrichtung nach Anspruch 17, **dadurch gekennzeichnet, dass** das erste und/oder das zweite Eingriffmittel mindestens eines aus Haken, Schlaufe, Kante, Kulisse, Rolle, Stift, umfasst.

19. Fördervorrichtung (10) umfassend eine Taschenentladevorrichtung (1, 1b-1k) nach einem der Ansprüche 9 bis 18, eine Laufschiene (4) und eine Vielzahl von seitlich offenen Transporttaschen (2, 2a-k), welche jeweils an einem entlang der Laufschiene (4) bewegbaren Laufwagen (3) hängend in einer Förderrichtung förderbar sind.

20. Fördervorrichtung (10) nach Anspruch 19, **dadurch gekennzeichnet, dass** die Transporttaschen (2, 2a-j) jeweils eine flexible Materialbahn (24) umfassen, welche jeweils eine Transportschlaufe ausbildend an einem Aufhängepunkt (P) am Laufwagen (3) hängt, wobei die Transporttasche (2a-j) im Bereich der Auflagefläche (21a-j) eine Verstärkung (25a, 251a) aufweist, welche eingerichtet ist, zum Anheben eines Teils (211b-i, 211.1 j, 211.2j) der Auflagefläche (21a-j) der Transporttasche (2a-j) mit der Anhebevorrichtung (11b-11i, 11.1j, 11.2j) zusammenzuwirken.

21. Fördervorrichtung (10) nach Anspruch 19 oder 20, **dadurch gekennzeichnet, dass** die Transporttaschen (2d-f) im Bereich von mindestens einer an der Auflagefläche (21d-f) anschliessenden Wandfläche (241d-f) der Transporttasche (2d-f) eine Verstärkungsstruktur (2411d-f, 24113e, 24114e, 24114f) aufweist, welche eingerichtet ist, Sollfaltstellen (24111d, 24112d, 24115e, 24115f) bereitzustellen, an welchen die Transporttasche (2d-f) beim Anheben des Teils der Auflagefläche (21d-f) der Transporttasche (2d-f) verformbar ist.
